# EUROPÄISCHE PATENTSCHRIFT

(11) **EP 3 297 415 B1**
(45) Veröffentlichungstag und Bekanntmachung des Hinweises auf die Patenterteilung: **23.09.2020**
(21) Anmeldenummer: 16723724.7
(22) Anmeldetag: 12.05.2016
(51) Int. Cl.: A01D 34/30

(54) **MESSERANBINDUNGSANORDNUNG FÜR OSZILLIEREND ANGETRIEBENE MÄHMESSER**
BLADE ATTACHMENT ASSEMBLY FOR MOWER BLADES DRIVEN IN AN OSCILLATING MANNER
DISPOSITIF DE RACCORDEMENT DE LAMES POUR LAMES DE FAUCHAGE À ENTRAÎNEMENT EN OSCILLATION

(30) Priorität: 22.05.2015 DE 102015108108
(43) Veröffentlichungstag der Anmeldung: 28.03.2018
(73) Patentinhaber: EWM Eichelhardter Werkzeug- und Maschinenbau GmbH, 57612 Eichelhardt (DE)
(72) Erfinder: SCHUMACHER, Heinrich Günter, 57612 Eichelhardt (DE); HEINERMANN, Jochen, 57612 Obererbach (DE)
(74) Vertreter: Neumann Müller Oberwalleney & Partner Patentanwälte
(86) Internationale Anmeldenummer: PCT/EP2016/060745
(87) Internationale Veröffentlichungsnummer: WO 2016/188769

(56) Entgegenhaltungen:
- EP-A1- 1 772 051
- EP-A2- 2 700 293
- DD-A1- 244 903
- DE-A1-102004 037 580

## Beschreibung

Die vorliegende Erfindung betrifft eine Messeranbindungsanordnung für oszillierend angetriebene Mähmesser, mit einer Welle, die eine erste Längsachse definiert und einen Aufnahmeraum aufweist, einem in den Aufnahmeraum eingreifenden und mit der Welle lösbar verbundenen Mähmesserantriebszapfen, der sich axial zur ersten Längsachse über die Welle hinaus erstreckt und eine zur ersten Längsachse radial versetzte zweite Längsachse definiert, wobei eine den Aufnahmeraum begrenzende Wandung der Welle eine in Umfangsrichtung gebogene erste Stützfläche aufweist, und wobei ein in den Aufnahmeraum eingreifender Kopflagerhaltebereich des Mähmesserantriebszapfens eine mit der ersten Stützfläche in Anlage stehende und zur ersten Stützfläche korrespondierend gebogene erste Anlagefläche aufweist, und Verbindungsmittel zum lösbaren Verbinden des Mähmesserantriebszapfens mit der Welle.

Die DE 10 2004 037 580 A1 zeigt eine Messeranbindungsanordnung für oszillierend angetriebene Mähmesser. Die bekannte Messeranbindungsanordnung weist eine Kurbelwelle mit einem Wellenendbereich auf, der Verbindungsmittel aufweist. Die Verbindungsmittel sind in Form einer radial verbindenden Flanschanordnung ausgebildet und umfassen eine sich axial aus dem Wellenendbereich herausragende, u-förmige Erhebung, welche zwei sich quer zur Rotationsachse auf der Stirnfläche des Wellenendbereiches erstreckende Schenkel aufweist. Zwischen den Schenkeln ist ein Freiraum zur lösbaren Aufnahme eines Mähmesserantriebszapfens vorgesehen. Der Mähmesserantriebszapfen weist an einem in den Aufnahmebereich eingreifenden Längsendbereich einen Kopflagerhaltebereich auf und ist mittels zwei Schraubverbindungen mit der Kurbelwelle verbunden. Durch diese Ausgestaltung müssen zwei Schrauben verwendet werden, um den Mähmesserantriebszapfen im Bereich des Wellenendbereiches an die Kurbelwelle zu pressen.

Aus der DD 244 903 A1 ist eine Doppelkurbel für Mähmaschinen zum Antrieb der Mähmesser bekannt. Ein erster Kurbelzapfen weist einen in axialer Richtung ausgebildeten zylindrischen Ansatz und einen profilierten Ansatz auf, die in einer analog ausgebildeten Aufnahmebohrung einer Schwungmasse eingespannt sind. Zum Einspannen des Kurbelzapfens weist die Schwungmasse einen durch die Aufnahmebohrung verlaufenden Schlitz und eine quer dazu angeordnete Spannschraube auf.

Aufgabe der vorliegenden Erfindung ist es daher, eine einfach zu montierende und wartungsfreundliche Messeranbindungsanordnung bereitzustellen.

Diese Aufgabe ist erfindungsgemäß bei einer Messeranbindungsanordnung für oszillierend angetriebene Mähmesser der eingangs genannten Art dadurch gelöst, dass eine den Aufnahmeraum begrenzende Wandung der Welle eine in Umfangsrichtung gebogene erste Stützfläche aufweist, und dass ein in den Aufnahmeraum eingreifender Kopflagerhaltebereich des Mähmesserantriebszapfens eine mit der ersten Stützfläche in Anlage stehende und zur ersten Stützfläche korrespondierend gebogene erste Anlagefläche aufweist. In der den Aufnahmeraum begrenzenden Wandung ist eine Hinterschneidung ausgebildet und der Kopflagerhaltebereich des Mähmesserantriebszapfens weist einen in die Hinterschneidung eingreifenden Kragen auf. Weiterhin ist die Hinterschneidung als eine sich radial zur zweiten Längsachse erstreckende Nut in der Wandung ausgebildet.

Der Erfindung liegt die Überlegung zugrunde, dass die Messeranbindungsanordnung im eingebauten Zustand ein Teil eines Mähmesserantriebes sein kann, bei dem eine rotatorische Bewegung in eine translatorische Hin- und Herbewegung umgewandelt wird. Im Betrieb des Mähmesserantriebs rotiert dann der Mähmesserantriebszapfen um die erste Längsachse der Welle. An einem freien, d.h. von der Welle weg gerichteten, Längsendbereich des Mähmesserantriebszapfens ist im eingebauten Zustand üblicherweise ein Mähmesser angeordnet, das durch die Hin- und Herbewegung des Mähmesserantriebszapfens entlang einer Bewegungsachse oszillierend angetrieben wird.

Erfindungsgemäß ist nunmehr vorgesehen, dass sich der im Betrieb um die erste Längsachse rotierende Mähmesserantriebszapfen mit einer gebogenen ersten Anlagefläche an einer korrespondierend gebogenen ersten Stützfläche der Welle abstützt. Wenn die Messeranordnung in einem Mähmesserantrieb eingebaut ist, kann an einem freien Längsendbereich des Mähmesserantriebszapfens ein Mähmesser gehalten sein, welches entlang der Bewegungsachse hin- und herbewegt wird. Im Betrieb des Mähmesserantriebes greift somit das Mähmesser durch die Rotation des Mähmesserantriebszapfens in Umfangsrichtung aus unterschiedlichen radialen Richtungen am freien Längsendbereich des Mähmesserantriebszapfens an, wodurch Querkräfte auf den Kopflagerhaltebereich, d.h. den in den Aufnahmeraum eingreifenden Längsendbereich des Mähmesserantriebszapfens, einwirken. Durch die einwirkenden Querkräfte wird die die gebogene erste Anlagefläche gegen die korrespondierend gebogene erste Stützfläche flächig gepresst. Im Unterschied zu einer gerade ausgebildeten Stütz- bzw. Anlagefläche, bei der die Flächenpressung zwischen den beiden Flächen nur dann maximal ist, wenn die Querkräfte senkrecht zur Stütz- bzw. Anlagefläche auf den Kopflagerhaltebereich einwirken, ist die Flächenpressung der erfindungsgemäßen Messeranbindungsanordnung über einen größeren zusammenhängenden Umfangsabschnitt maximal. Auf diese Weise wird gewährleistet, dass der Mähmesserantriebszapfen über den Umfang der ersten Stützfläche an der Wandung des Aufnahmeraums abgestützt ist. Dadurch wird insgesamt eine bessere Flächenpressung zwischen dem Kopflagerhaltebereich des Mähmesserantriebszapfens und der Kurbelwelle erzielt.

Zudem wird durch diese Ausgestaltung der Flächenkontakt zwischen dem Mähmesserantriebszapfen im Bereich des Kopflagerhaltebereichs und der Wandung der Welle zusätzlich erhöht. Dadurch, dass das Mähmesser am freien Längsendbereich des Mähmesserantriebszapfens angreift, wird aufgrund des Hebelarms ein Kippmoment erzeugt, welches durch die Hinterschneidung und den eingreifenden Kragen aufgenommen werden kann.

Dadurch greift der Kragen senkrecht zur zweiten Längsachse und damit parallel zur Angriffsrichtung des am freien Längsendbereich des Mähmesserantriebszapfens angreifenden Mähmessers in die Nut der Wandung ein, wodurch der Mähmesserantriebszapfen senkrecht zum Hebelarm an der Wandung abgestützt ist. Insbesondere erstreckt sich die Nut halbkreisförmig um die zweite Längsachse. Grundsätzlich kann die Wandung auch mehrere über den Umfang verteilte und sich in Umfangsrichtung erstreckende Nuten aufweisen, wobei entlang des Kopflagerhaltebereichs entsprechend mehrere Kragenabschnitte vorgesehen sein können, die in die jeweiligen Nuten eingreifen.

Weiterhin kann die erste Stützfläche konkav gekrümmt und die erste Anlagefläche konvex gekrümmt sein. Auf diese Weise kann der Mähmesserantriebszapfen im Bereich der ersten Anlagefläche zumindest abschnittsweise zylindrisch ausgebildet sein. Insbesondere können ein Querschnitt der ersten Stützfläche und ein Querschnitt der ersten Anlagefläche jeweils teilkreisförmig um einen auf der zweiten Längsachse liegenden Mittelpunkt sein. Durch die teilkreisförmige Ausgestaltung um die zweite Längsachse ergibt sich in Umfangsrichtung eine besonders gute Abstützung des Mähmesserantriebszapfens an der den Aufnahmeraum begrenzenden Wandung der Welle.

Des Weiteren können die erste Stützfläche und die erste Anlagefläche parallel zur zweiten Längsachse ausgebildet sein. Dadurch wirkt die durch das Mähmesser erzeugte Querkraft senkrecht auf die erste Stützfläche bzw. die erste Anlagefläche ein. Vorzugsweise ist die im Querschnitt teilkreisförmige erste Stützfläche und im Querschnitt teilkreisförmige erste Anlagefläche zur zweiten Längsachse zumindest über einen Teilumfang zylindrisch ausgebildet.

Gemäß einer Ausführungsform der vorliegenden Erfindung ist vorgesehen, dass die Verbindungsmittel eine Schraube aufweisen, die durch eine am Kopflagerhaltebereich des Mähmesserantriebszapfens ausgebildete erste Bohrung in eine in der Wandung ausgebildete zweite Bohrung eingreift. In bevorzugter Weise ist vorgesehen, dass der Mähmesserantriebszapfen mit genau einer Schraube an der Wandung der Welle festgeschraubt ist. Durch die gebogene Ausgestaltung der ersten Stützfläche und der ersten Anlagefläche wird eine derart hohe Flächenpressung zwischen den beiden Flächen erzeugt und der Mähmesserantriebszapfen derart günstig an der Wandung der Welle abgestützt, dass der Mähmesserantriebszapfen mit nur einem einzigen Befestigungsmittel, wie beispielsweise einer Schraube oder einer Gewindemutter eines Stehbolzens, sicher und haltbar mit der Wandung verschraubt werden kann. Dadurch wird die Teilevielfalt der Messeranbindungsanordnung reduziert. Zudem ist die Messeranbindungsanordnung montage- und wartungsfreundlich, da der Mähmesserantriebszapfen durch Lösen bzw. Festziehen lediglich einer einzigen Schraube ausgetauscht bzw. angebracht werden kann.

Weiterhin können die erste Bohrung des Mähmesserantriebszapfens und die zweite Bohrung der Wandung radial zur zweiten Längsachse ausgebildet sein. Vorzugsweise ist in der ersten Anlagefläche des Mähmesserantriebszapfens eine erste Öffnung für die erste Bohrung und in der ersten Stützfläche der Wandung eine zweite Öffnung für die zweite Bohrung ausgebildet. Damit werden die erste Anlagefläche und die erste Stützfläche zusätzlich über die Schraube aufeinandergepresst.

Des Weiteren kann der Mähmesserantriebszapfen im Kopflagerhaltebereich eine sich parallel zur zweiten, bzw. zur parallel verlaufenden ersten, Längsachse erstreckende Anschlagfläche aufweisen, wobei in der Anschlagfläche eine dritte Öffnung für die erste Bohrung ausgebildet ist. Die erste Bohrung des Mähmesserantriebszapfens ist somit als eine Durchgangsbohrung ausgestaltet, die das Verbindungsmittel, insbesondere die Schraube, durchgreift. Auf diese Weise kann das Verbindungsmittel einfach eingesetzt bzw. entnommen werden. Durch die gerade, d.h. nicht gebogene, Anschlagfläche kann das Verbindungsmittel, insbesondere ein Schraubenkopf der Schraube, flächig an der Anschlagfläche angreifen und den Mähmesserantriebszapfen gegen die Wandung pressen. Insbesondere ist die dritte Öffnung diametral zur ersten Öffnung am Kopflagerhaltebereich des Mähmesserantriebszapfens angeordnet. Auf diese Weise wird die Flächenpressung zwischen der ersten Stützfläche und der ersten Anlagefläche radial erhöht.

Weiterhin kann vorgesehen sein, dass der Kragen an einem in den Aufnahmeraum eingreifenden Längsende des Kopflagerhaltebereiches des Mähmesserantriebszapfens ausgebildet ist. Dadurch wird der Mähmesserantriebszapfen besonders gut abgestützt an der Wandung der Welle abgestützt.

Weiterhin kann vorgesehen sein, dass die Wandung zwischen einem die Hinterschneidung radial begrenzenden Wandabschnitt der Wandung und der ersten Stützfläche eine schräg zur ersten Stützfläche angeordnete zweite Stützfläche aufweist und dass der Mähmesserantriebszapfen zwischen einer den Kragen radial begrenzenden Kragenfläche und der ersten Anlagefläche eine parallel zur zweiten Stützfläche angeordnete und mit der zweiten Stützfläche in Anlage stehende zweite Anlagefläche aufweist. Somit ist Hinterschneidung zumindest in etwa konisch ausgebildet. Durch die schräg, d.h. nicht parallel, zur ersten Stützfläche angeordnete zweite Stützfläche der Wandung wird der Mähmesserantriebszapfen beim Befestigen der Verbindungsmittel im Bereich des Kragens an die Kragenfläche gepresst, wodurch die Flächenpressung zwischen dem Mähmesserantriebszapfen und der Wandung der Welle zusätzlich verbessert wird.

Vorzugsweise ist die erste Stützfläche koaxial zur zweiten Längsachse angeordnet und kreiszylinderabschnittsförmig gestaltet. Dies bedeutet, dass die erste Stützfläche auf einer Mantelfläche eines gedachten Kreiszylinderabschnitts angeordnet ist, sich also nur über einen Teil des Umfangs um die zweite Längsachse erstreckt.

Die zweite Stützfläche ist vorzugsweise ebenfalls koaxial zur zweiten Längsachse angeordnet und kegelstumpfabschnittsförmig gestaltet. Dies bedeutet, dass die zweite Stützfläche auf einer Mantelfläche eines gedachten Kegelstumpfabschnitts angeordnet ist, sich also nur über einen Teil des Umfangs um die zweite Längsachse erstreckt. In besonderer Ausgestaltung schließt die zweite Stützfläche einen Kegelwinkel von 130° bis 170°, vorzugsweise von 150°, ein. Anders ausgedrückt, schließt die zweite Stützfläche mit der zweiten Längsachse bzw. mit der ersten Stützfläche einen Winkel von 95° bis 115°, vorzugsweise von 105°, ein.

Vorzugsweise ist der Winkel zwischen der ersten Stützfläche und der zweiten Stützfläche identisch zum Winkel zwischen der ersten Anlagefläche und der zweiten Anlagefläche. Dadurch wird der Mähmesserantriebszapfen beim Verbinden mittels der Verbindungsmittel zusätzlich gegen eine den Aufnahmeraum begrenzende Bodenplatte der Welle gepresst.

Der Mähmesserantriebszapfen ist vorzugsweise mit einer quer zur zweiten Längsachse angeordneten Stirnfläche in Anlage zu einer den Aufnahmeraum begrenzenden Bodenplatte der Welle gehalten. Durch die winklig zur Bodenplatte gestaltete zweite Stützfläche wird beim Verpressen der zweiten Anlagefläche gegen die zweite Stützfläche der Mähmesserantriebszapfen gegen die Bodenplatte gepresst, wodurch ein Verspannen des Mähmesserantriebszapfen in dem Aufnahmeraum und eine bessere Abstützung von Kippkräften erzielt wird.

Insbesondere ist die Welle eine Kurbelwelle, die insbesondere in eine Rotorwelle eines Getriebes eingreift. Das Getriebe kann beispielsweise ein Winkelgetriebe mit winklig zueinander angeordneten Eingangs- und Ausgangswellen oder ein Längsgetriebe mit parallel zueinander angeordneten Eingangs- und Ausgangswellen sein, das zum oszillierenden Antrieb eines Mähmessers ausgebildet ist.

Bevorzugte Ausführungsbeispiele der Erfindung werden in den Zeichnungen dargestellt und nachstehend beschrieben. Hierin zeigt:
- Figur 1: eine Messeranbindungsanordnung gemäß einer ersten Ausführungsform der vorliegenden Erfindung in perspektivischer Darstellung;
- Figur 2: die Messeranbindungsanordnung aus Figur 1 in Seitenansicht;
- Figur 3: eine Kurbelwelle der Messeranbindungsanordnung aus Figur 1 in perspektivischer Darstellung;
- Figur 4: die Kurbelwelle in Draufsicht;
- Figur 5: die Kurbelwelle in Schnittansicht entlang der in Figur 4 gezeigten Linie V-V;
- Figur 6: einen Mähmesserantriebszapfen der Messeranbindungsanordnung aus Figur 1 in perspektivischer Darstellung;
- Figur 7: der Mähmesserantriebszapfen in Seitenansicht;
- Figur 8: der Mähmesserantriebszapfen in Schnittansicht;
- Figur 9: der Mähmesserantriebszapfen in einer weiteren Seitenansicht;
- Figur 10: der Mähmesserantriebszapfen in Schnittansicht entlang der in Figur 9 gezeigten Linie X-X; und
- Figur 11: eine Messeranbindungsanordnung gemäß einer zweiten Ausführungsform der vorliegenden Erfindung.

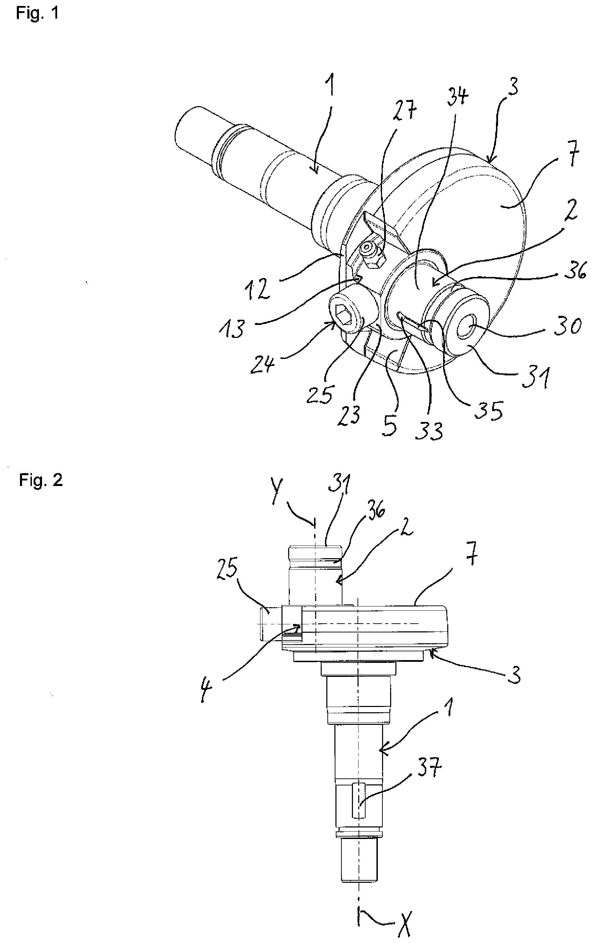

In den Figuren 1 und 2 ist eine Messeranbindungsanordnung gemäß einer ersten Ausführungsform der vorliegenden Erfindung dargestellt. Die Messeranbindungsanordnung kann ein Teil eines Mähmesserantriebs zum oszillierenden Antrieb eines nicht gezeigten Mähmessers einer ebenfalls nicht gezeigten Landmaschine sein. Die Messeranbindungsanordnung weist eine Kurbelwelle 1 und einen mit der Kurbelwelle 1 drehfest verbundenen Mähmesserantriebszapfen 2 auf.

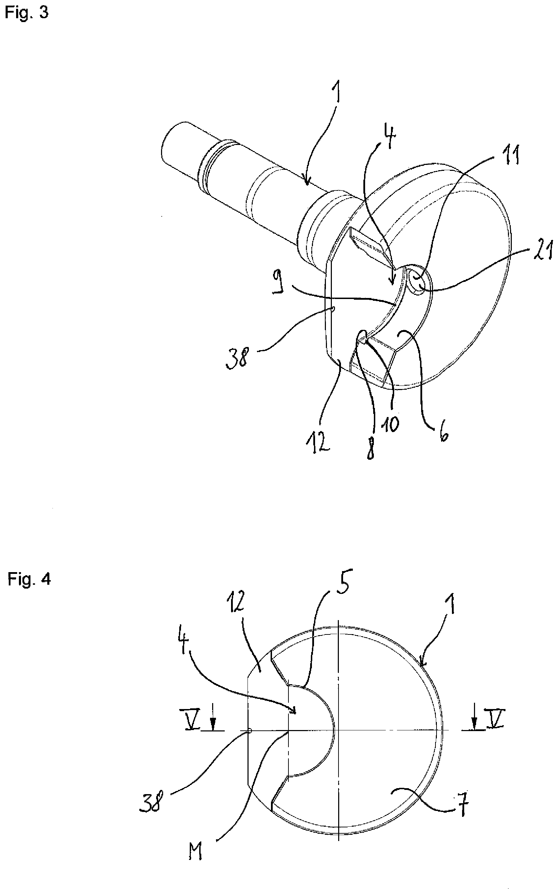

In den Figuren 3 bis 5 ist die Kurbelwelle 1 losgelöst vom Mähmesserantriebszapfen 2 dargestellt. Die Kurbelwelle 1 definiert eine erste Längsachse X, um die die Kurbelwelle 1 im Betrieb der Messeranbindungsanordnung rotiert. In der Figur 3 ist erkennbar, dass die Kurbelwelle 1 an einem ersten Längsendbereich 3 einen Aufnahmeraum 4 aufweist, der durch eine im Querschnitt halbkreisförmige Wandung 5 seitlich begrenzt ist. Ein in der Figur 4 gezeigter Mittelpunkt M der im Querschnitt halbkreisförmigen Wandung 5 liegt auf einer zur ersten Längsachse X radial versetzten zweiten Längsachse Y. Die Wandung 5 weist eine konkav gekrümmte erste Stützfläche 6 auf, die parallel zur zweiten Längsachse Y verläuft und ebenfalls im Querschnitt halbkreisförmig um den Mittelpunkt M angeordnet ist. In axialer Richtung ist die erste Stützfläche 6 zwischen einer Stirnseite 7 der Kurbelwelle 1 und einer in der Wandung 5 vorgesehenen Hinterschneidung 8 begrenzt. Die Hinterschneidung ist als eine sich radial zur zweiten Längsachse Y erstreckende Nut in der Wandung 5 ausgebildet. Zwischen einem die Hinterschneidung 8 radial begrenzenden Wandabschnitt 9 der Wandung 5 und der ersten Stützfläche 6 ist eine schräg zur ersten Stützfläche 6 angeordnete zweite Stützfläche 10 vorgesehen. Konkret sind die erste Stützfläche 6 und die zweite Stützfläche 10 unter Bildung eines Winkels α von 105° schräg zueinander angestellt. Die erste Stützfläche 6 ist koaxial zur zweiten Längsachse Y angeordnet und ist kreiszylinderabschnittsförmig gestaltet, liegt also auf einer Mantelfläche eines gedachten Kreiszylinders. Die erste Stützfläche 6 ist also parallel zur zweiten Längsachse Y ausgerichtet. Die zweite Stützfläche 10 ist koaxial zur zweiten Längsachse Y angeordnet und ist kegelstumpfabschnittsförmig gestaltet, wobei die zweite Stützfläche 10 einen Kegelwinkel von 150° aufweist, und anders ausgedrückt mit der ersten Stützfläche 6 den Winkel α von 105° bildet.

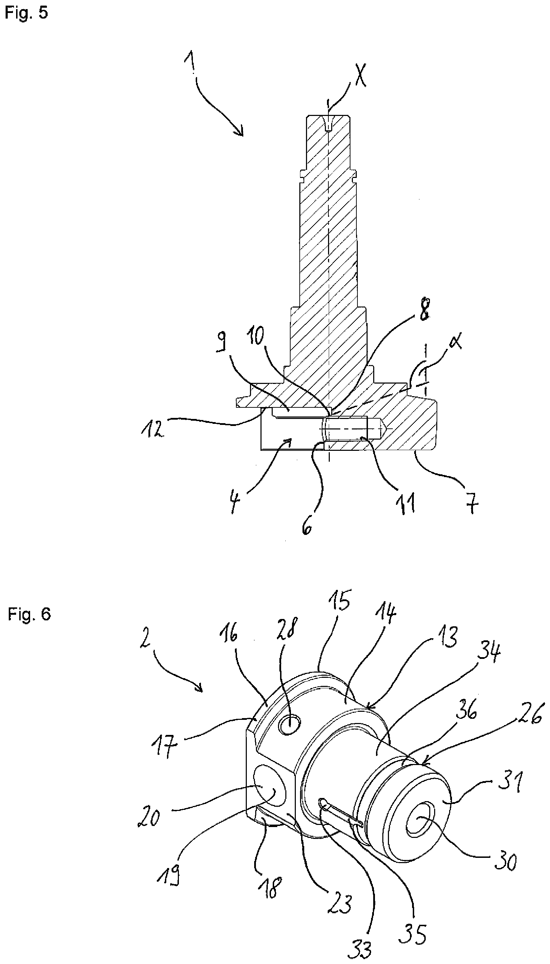

Weiterhin ist insbesondere in den Figuren 3 und 5 erkennbar, dass in der ersten Stützfläche 6 eine sich radial zur ersten Längsachse X erstreckende Gewindebohrung 11 (zweite Bohrung) mit einem Innengewinde vorgesehen ist. An einer von der Stirnseite 7 weg gerichteten Unterseite des Aufnahmeraums 4 ist dieser durch eine tellerartige Bodenplatte 12 begrenzt. Die Bodenplatte 12 weist im Querschnitt eine kreisförmige Fläche auf, wobei ein von der Wandung 5 entfernt liegender Bereich der Bodenplatte 12 aus der Kreisfläche abgeschnitten ist. Somit ist der Aufnahmeraum 4 nach unten durch die Bodenplatte 12 und seitlich durch die halbkreisförmige Wandung 5 begrenzt, wodurch der Aufnahmeraum 4 seitlich, d.h. radial zur zweiten Längsachse Y, und an der Stirnseite 7 der Kurbelwelle 1 offen ausgebildet ist.

In den Figuren 6 bis 10 ist der Mähmesserantriebszapfen 2 losgelöst von der Kurbelwelle 1 dargestellt. Der Mähmesserantriebszapfen 2 greift mit einem Kopflagerhaltebereich 13 in den Aufnahmeraum 4 der Kurbelwelle 1, wobei sich der Mähmesserantriebszapfen 2 in dem in den Figuren 1 und 2 gezeigten eingesetzten Zustand axial zur ersten Längsachse X über die Kurbelwelle 1 hinaus erstreckt. Der Mähmesserantriebszapfen 2 definiert die zur ersten Längsachse X radial versetzte zweite Längsachse Y, auf der auch der in Figur 4 hervorgehobene Mittelpunkt M der halbkreisförmig ausgebildeten Wandung 5 liegt. Der Kopflagerhaltebereich 13 weist eine zur ersten Stützfläche 6 korrespondierend gebogene erste Anlagefläche 14 auf, die mit der ersten Stützfläche 6 flächig in Anlage steht. Entsprechend zur konkav gekrümmten ersten Stützfläche 6 ist die erste Anlagefläche 14 konvex gekrümmt. Die erste Anlagefläche 14 verläuft parallel zur zweiten Längsachse Y und erstreckt sich im Querschnitt teilkreisförmig um den auf der zweiten Längsachse Y liegenden Mittelpunkt M. An einem in den Aufnahmeraum 4 eingreifenden Längsende 15 des Kopflagerhaltebereichs 13 ist ein sich in Umfangsrichtung erstreckender Kragen 16 ausgebildet. Der Kragen 16 greift im eingesetzten Zustand in die Nut 8 der Wandung 5 der Kurbelwelle 1 ein. Weiterhin weist der Kopflagerhaltebereich 13 zwischen einer den Kragen 16 radial begrenzenden Kragenfläche 17 und der ersten Anlagefläche 14 eine parallel zur zweiten Stützfläche 10 angeordnete zweite Anlagefläche 18 auf. Die zweite Anlagefläche 18 steht mit der zweiten Stützfläche 10 flächig in Anlage. In zur zweiten Stützfläche 10 korrespondierenden Weise ist zwischen der ersten Anlagefläche 14 und der zweiten Anlagefläche 18 ein Winkel von 105°eingeschlossen.

Weiterhin ist im Kopflagerhaltebereich 13 des Mähmesserantriebszapfens 2 eine hier gestufte Durchgangsbohrung 19 (erste Bohrung) ausgebildet, die sich im in den Figuren 1 und 2 eingesetzten Zustand radial zur zweiten Längsachse Y erstreckt. Konkret weist der Mähmesserantriebszapfen 2 in der ersten Anlagefläche 14 eine erste Öffnung 20 der Durchgangsbohrung 19 auf, die koaxial zu einer zweiten Öffnung 21 in der ersten Stützfläche 6 der in der Wandung 5 ausgebildeten Gewindebohrung 11 angeordnet ist. Diametral zur ersten Öffnung 20 ist am Kopflagerhaltebereich 13 eine dritte Öffnung 22 für die Durchgangsbohrung 19 vorgesehen. Die dritte Öffnung 22 ist innerhalb einer Anschlagfläche 23 angeordnet, die parallel zur zweiten Längsachse Y verläuft. Der ansonsten zylindrisch ausgebildete Kopflagerhaltebereich 13 ist entlang der Anschlagfläche 23, die sich axial bis zum Längsende 15 des Mähmesserantriebszapfen 2 erstreckt, gerade, d.h. nicht gebogen, ausgebildet und schließt im in den Figuren 1 und 2 eingesetzten Zustand bündig mit der abgeschnittenen Bodenplatte 12 ab. Somit ist mit Ausnahme der geraden Anschlagfläche 23 der Mähmesserantriebszapfen 2 aus mehreren zylindrischen Abschnitten unterschiedlicher Durchmesser geformt, wobei der Kopflagerhaltebereich 13 und insbesondere der Kragen 16 die Abschnitte mit den größten Durchmessern aufweisen.

Durch die Durchgangsbohrung 19 greift ein Verbindungsmittel in Form einer Schraube 24 in die Gewindebohrung 11 der Wandung 5. Ein Schraubenkopf 25 der Schraube 24 stützt sich an der Anschlagfläche 23 ab, sodass der Mähmesserantriebszapfen 2 beim Anziehen der Schraube 24 mit der ersten Anlagefläche 14 gegen die erste Stützfläche 6 der Wandung 5 gepresst wird. Zudem wird der Mähmesserantriebszapfen 2 beim Anziehen der Schraube 24 durch die schräg gestellte zweite Anlagefläche 18, die flächig mit der zweiten Stützfläche 10 in Anlage steht, mit einer der Bodenplatte 12 zugewandten Stirnfläche 40 gegen die Bodenplatte 12 gepresst. Somit wird mittels einer einzigen Schraube 24 eine sichere und drehfeste Verbindung zwischen dem Mähmesserantriebszapfen 2 und der Kurbelwelle 1 mit einer hohen Flächenpressung bereitgestellt. Zur Montage bzw. Demontage der Messeranbindungsanordnung muss lediglich eine einzige Schraube gelöst werden, um den Mähmesserantriebszapfen 2 von der Kurbelwelle 1 zu lösen bzw. wieder an der Kurbelwelle 1 zu befestigen.

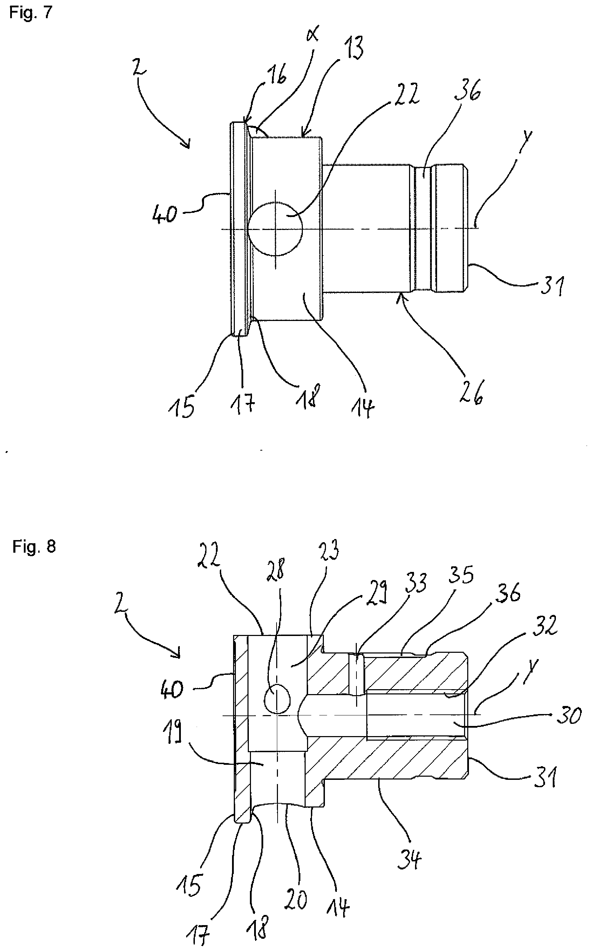

Weiterhin weist der Mähmesserantriebszapfen 2 hier eine Schmierung für ein nicht gezeigtes Wälzlager, das an einen freien Längsendbereich 26 des Mähmesserantriebszapfens 2 aufgesetzt sein kann, auf. Wenn keine Schmierung benötigt wird, kann die Durchgangsbohrung 19 auch mit einem konstanten Durchmesser, d.h. nicht gestuft, ausgebildet sein. Zur in den Figuren 8 bis 10 im Detail gezeigten Schmierung weist der Mähmesserantriebszapfen 2 einen Schmiernippel 27 auf, der in einer radial zur zweiten Längsachse Y verlaufenden Bohrung 28 eingeschraubt ist. Die Bohrung 28 ist mit der gestuften Durchgangsbohrung 19 entlang eines Abschnitts 29 der Durchgangsbohrung 19, die einen maximalen Durchmesser aufweist, verbunden. Koaxial zur zweiten Längsachse Y ist in dem Mähmesserantriebszapfen 2 eine Axialbohrung 30 vorgesehen, die an einem Ende mit dem Abschnitt 29 der Durchgangsbohrung 19 und am anderen Ende offen ausgebildet ist und mit einer Stirnseite 31 des Mähmesserantriebszapfens 2 abschließt. Am zur Stirnseite 30 weisenden freien Längsendbereich 26 des Mähmesserantriebszapfens 2 ist in der Axialbohrung 30 ein Innengewinde 32 vorgesehen, mittels dessen das nicht gezeigte Wälzlager am Mähmesserantriebszapfen 2 festgeschraubt werden kann. Unterhalb des Innengewindes 32 der Axialbohrung 30 ist eine radial verlaufende Schmierbohrung 33 vorgesehen, die in eine an einer radial außenliegenden Außenseite 34 des Mähmesserantriebszapfens 2 in einen axial verlaufenden Schmierkanal 35 mündet. Der Schmierkanal 35 erstreckt sich bis zu einer in die Außenseite 34 eingebrachte Ringnut 36.

Im Betrieb der erfindungsgemäßen Messeranbindungsanordnung ist diese üblicherweise ein Teil des nicht gezeigten Mähmesserantriebs, mittels dem eine rotatorische Bewegung in eine translatorische Hin- und Herbewegung umgewandelt wird. Hierzu kann die Kurbelwelle 1 beispielsweise in eine Rotorwelle eines Getriebes eingreifen, wobei die hier gezeigte Kurbelwelle 1 eine Nut 37 zur drehfesten Verbindung eines nicht gezeigten Stirnrades mittels einer Nut-Feder-Verbindung aufweist. Um das Stirnrad mit der Kurbelwelle 1 in einer definierten Einbaustellung im Getriebe einsetzen zu können, ist auf der Bodenplatte 12 eine Markierung 38 vorgesehen, die in der definierten Einbaustellung mit einer an einem Getriebegehäuse angebrachten weiteren Markierung fluchtet. Im Betrieb eines solchen Mähmesserantriebs rotiert der Mähmesserantriebszapfen 2 um die erste Längsachse X der Kurbelwelle 1. Am freien Längsendbereich 31 des Mähmesserantriebszapfens 1 ist üblicherweise das Wälzlager angeordnet, an dem das im Betrieb oszillierend angetriebenen Mähmesser gehalten sein kann. Zur Schmierung des Wälzlagers wird in an sich bekannter Weise der Schmiernippel abgeschmiert, wobei sich die Schmierung zumindest entlang des Abschnitts 29 der Durchgangsbohrung 19 um die Schraube 24 legt und über die Axialbohrung 30, den Schmierkanal 35 und die Ringnut 36 an das Wälzlager geführt wird.

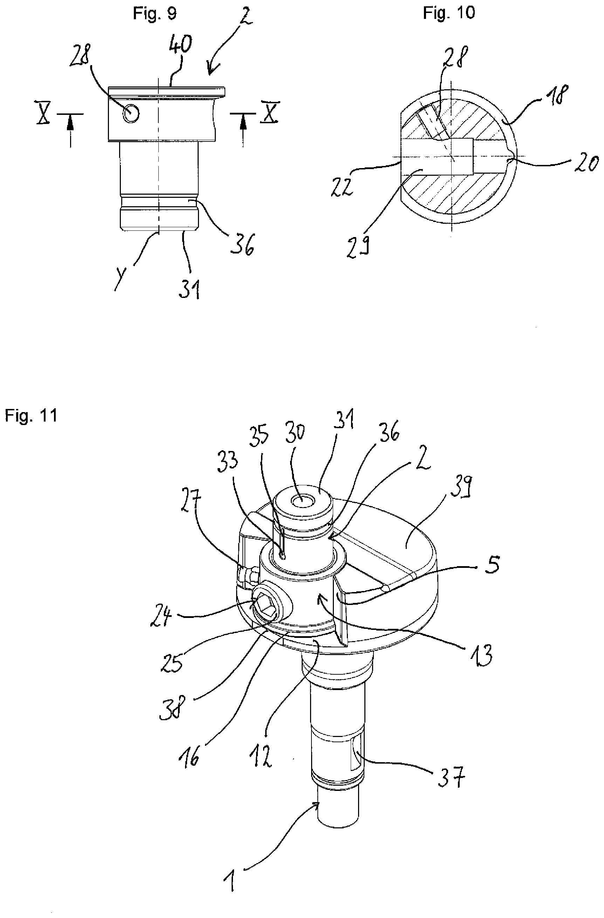

In der Figur 11 ist eine Messeranbindungsanordnung gemäß einer zweiten Ausführungsform der vorliegenden Erfindung gezeigt, wobei der Grundaufbau der in den Figuren 1 bis 10 gezeigten Messeranbindungsanordnung entspricht. Gleiche Bauteile sind mit gleichen Bezugsziffern versehen. Die Messeranbindungsanordnung gemäß der zweiten Ausführungsform ist vergleichsweise stabiler ausgestaltet, weshalb die Wandung 5 eine größere axiale Erstreckung aufweist. Damit die nicht gezeigten Mähmesser die Kurbelwelle 1 im Betrieb nicht berühren, ist die Stirnseite 7 der Kurbelwelle 1 an der vom Aufnahmeraum 4 weg gerichteten Seite 39 abgeschrägt. Weiterhin unterscheidet sich die in der Figur 11 gezeigte Messeranbindungsanordnung lediglich dadurch von der in den Figuren 1 bis 10 gezeigten Messeranbindungsanordnung, dass der Schraubenkopf 25 der eingesetzten Schraube 24 in der Durchgangsbohrung 19 teilweise versenkt ist. Somit sind der Kopflagerhaltebereich 13 über den gesamten Umfang zylindrisch ausgebildet und der Kragen 16 ringförmig geschlossen. Die Bodenplatte 12 ist hier über nahezu den gesamten Umfang im Querschnitt kreisförmig ausgebildet, wobei die Bodenplatte 12 nur in Verlängerung des Schraubenkopfes 25 abgeflacht ist.

### Bezugszeichenliste

- 1: Kurbelwelle
- 2: Mähmesserantriebszapfen
- 3: erster Längsendbereich
- 4: Aufnahmeraum
- 5: Wandung
- 6: erste Stützfläche
- 7: Stirnseite
- 8: Nut
- 9: Wandabschnitt
- 10: zweite Stützfläche
- 11: Gewindebohrung
- 12: Bodenplatte
- 13: Kopflagerhaltebereich
- 14: erste Anlagefläche
- 15: Längsende
- 16: Kragen
- 17: Kragenfläche
- 18: zweite Anlagefläche
- 19: Durchgangsbohrung
- 20: erste Öffnung
- 21: zweite Öffnung
- 22: dritte Öffnung
- 23: Anschlagfläche
- 24: Schraube
- 25: Schraubenkopf
- 26: Längsendbereich
- 27: Schmiernippel
- 28: Bohrung
- 29: Abschnitt
- 30: Axialbohrung
- 31: Stirnseite
- 32: Innengewinde
- 33: Schmierbohrung
- 34: Außenseite
- 35: Schmierkanal
- 36: Ringnut
- 37: Nut
- 38: Markierung
- 39: abgeschrägte Seite
- 40: Stirnfläche

- α: Winkel
- M: Mittelpunkt
- X: erste Längsachse
- Y: zweite Längsachse

## Patentansprüche

1. Messeranbindungsanordnung für oszillierend angetriebene Mähmesser, mit einer Welle (1), die eine erste Längsachse (X) definiert und einen Aufnahmeraum (4) aufweist,
einem in den Aufnahmeraum (4) eingreifenden und mit der Welle (1) lösbar verbundenen Mähmesserantriebszapfen (2), der sich axial zur ersten Längsachse (X) über die Welle (1) hinaus erstreckt und eine zur ersten Längsachse (X) radial versetzte zweite Längsachse (Y) definiert, wobei eine den Aufnahmeraum (4) begrenzende Wandung (5) der Welle (1) eine in Umfangsrichtung gebogene erste Stützfläche (6) aufweist, und wobei ein in den Aufnahmeraum (4) eingreifender Kopflagerhaltebereich (13) des Mähmesserantriebszapfens (2) eine mit der ersten Stützfläche (6) in Anlage stehende und zur ersten Stützfläche (6) korrespondierend gebogene erste Anlagefläche (14) aufweist, und Verbindungsmittel (24) zum lösbaren Verbinden des Mähmesserantriebszapfens (2) mit der Welle (1),
**dadurch gekennzeichnet,**
**dass** in der den Aufnahmeraum (4) begrenzenden Wandung (5) eine Hinterschneidung (8) ausgebildet ist und dass der Kopflagerhaltebereich (13) des Mähmesserantriebszapfens (2) einen in die Hinterschneidung (8) eingreifenden Kragen (16) aufweist, wobei die Hinterschneidung als eine sich radial zur zweiten Längsachse (Y) erstreckende Nut (8) in der Wandung (5) ausgebildet ist.

2. Messeranbindungsanordnung nach Anspruch 1, **dadurch gekennzeichnet, dass** die erste Stützfläche (6) konkav gekrümmt ist und dass die erste Anlagefläche (14) konvex gekrümmt ist.

3. Messeranbindungsanordnung nach Anspruch 1 oder 2, **dadurch gekennzeichnet,**
**dass** ein Querschnitt der ersten Stützfläche (6) und ein Querschnitt der ersten Anlagefläche (14) jeweils teilkreisförmig um einen auf der zweiten Längsachse (Y) liegenden Mittelpunkt (M) sind.

4. Messeranbindungsanordnung nach einem der vorherigen Ansprüche, **dadurch gekennzeichnet,**
**dass** die erste Stützfläche (6) und die erste Anlagefläche (14) parallel zur zweiten Längsachse (Y) ausgebildet sind.

5. Messeranbindungsanordnung nach einem der vorherigen Ansprüche, **dadurch gekennzeichnet,**
**dass** die Verbindungsmittel eine Schraube (24) aufweisen, die durch eine am Kopflagerhaltebereich (13) des Mähmesserantriebszapfens (2) ausgebildete erste Bohrung (19) in eine in der Wandung (5) ausgebildete zweite Bohrung (11) eingreift.

6. Messeranbindungsanordnung nach Anspruch 5, **dadurch gekennzeichnet, dass** die erste Bohrung (19) des Mähmesserantriebszapfens (2) und die zweite Bohrung (11) der Wandung (5) radial zur zweiten Längsachse (Y) ausgebildet sind.

7. Messeranbindungsanordnung nach Anspruch 5 oder 6, **dadurch gekennzeichnet,**
**dass** in der ersten Anlagefläche (14) des Mähmesserantriebszapfens (2) eine erste Öffnung (20) für die erste Bohrung (19) und in der ersten Stützfläche (6) der Wandung (5) eine zweite Öffnung (21) für die zweite Bohrung (11) ausgebildet sind.

8. Messeranbindungsanordnung nach Anspruch 7, **dadurch gekennzeichnet, dass** der Mähmesserantriebszapfen (2) im Kopflagerhaltebereich (13) eine sich parallel zur zweiten Längsachse (Y) erstreckende Anschlagfläche (23) aufweist, wobei in der Anschlagfläche (23) eine dritte Öffnung (22) für die erste Bohrung (19) ausgebildet ist.

9. Messeranbindungsanordnung nach Anspruch 8, **dadurch gekennzeichnet, dass** die dritte Öffnung (22) diametral zur ersten Öffnung (20) am Kopflagerhaltebereich (13) des Mähmesserantriebszapfens (2) angeordnet ist.

10. Messeranbindungsanordnung nach Anspruch 1, **dadurch gekennzeichnet, dass** der Kragen (16) an einem in den Aufnahmeraum (4) eingreifenden Längsende (15) des Kopflagerhaltebereiches (13) des Mähmesserantriebszapfens (2) ausgebildet ist.

11. Messeranbindungsanordnung nach Anspruch 1 oder 10, **dadurch gekennzeichnet,**
**dass** die Wandung (5) zwischen einem die Hinterschneidung (8) radial begrenzenden Wandabschnitt (9) der Wandung (5) und der ersten Stützfläche (6) eine schräg zur ersten Stützfläche (6) angeordnete zweite Stützfläche (10) aufweist und dass der Mähmesserantriebszapfen (2) zwischen einer den Kragen (16) radial begrenzenden Kragenfläche (17) und der ersten Anlagefläche (14) eine parallel zur zweiten Stützfläche (10) angeordnete und mit der zweiten Stützfläche (10) in Anlage stehende zweite Anlagefläche (18) aufweist.

12. Messeranbindungsanordnung nach Anspruch 11, **dadurch gekennzeichnet, dass** die erste Stützfläche (6) koaxial zur zweiten Längsachse (Y) angeordnet ist und kreiszylinderabschnittsförmig gestaltet ist.

13. Messeranbindungsanordnung nach Anspruch 11 oder 12, **dadurch gekennzeichnet,**
**dass** die zweite Stützfläche (10) koaxial zur zweiten Längsachse (Y) angeordnet ist und kegelstumpfabschnittsförmig gestaltet ist, wobei die zweite Stützfläche (10) vorzugsweise einen Kegelwinkel von 130° bis 170° aufweist.

14. Messeranbindungsanordnung nach einem der vorherigen Ansprüche, **dadurch gekennzeichnet,**
**dass** der Mähmesserantriebszapfen (2) mit einer quer zur zweiten Längsachse (Y) angeordneten Stirnfläche (40) in Anlage zu einer den Aufnahmeraum (4) begrenzenden Bodenplatte (12) gehalten ist.

## Claims

1. Knife attachment arrangement for oscillatingly driven mower knives, comprising
a shaft (1) defining a first longitudinal axis (X) and having a receiving space (4),
a mower knife drive pin (2) engaging in the receiving space (4) and being detachably connected to the shaft (1), the mower knife drive pin (2) extends axially with respect to the first longitudinal axis (X) beyond the shaft (1) and defines a second longitudinal axis (Y) being radially offset with respect to the first longitudinal axis (X), wherein a wall (5) of the shaft (1) that delimits the receiving space (4) has a first support face (6) curved in the circumferential direction, and wherein a head bearing holding area (13) of the mower knife drive pin (2) engages in the receiving space (4) and has a first contact face (14) that is in contact with the first support face (6) and is curved opposite to the first support face (6), and
connecting means (24) for detachable connection of the mower knife drive pin (2) to the shaft (1),
**characterised in**
**that** an undercut (8) is formed in the wall (5) delimiting the receiving space (4) and in that the head bearing holding area (13) of the mower knife drive pin (2) has a collar (16) engaging in the undercut (8), wherein the undercut is formed as a groove (8) in the wall (5), the groove (8) extends radially with respect to the second longitudinal axis (Y).

2. Knife attachment arrangement according to claim 1,
**characterised in**
**that** the first support face (6) is concavely curved and that the first contact face (14) is convexly curved.

3. Knife attachment arrangement according to claim 1 or 2,
**characterised in**
**that** a cross-section of the first support face (6) and a cross-section of the first contact face (14) are, respectively, arranged circular in sections around a centre point (M) that is arranged on the second longitudinal axis (Y).

4. Knife attachment arrangement according to any one of the preceding claims,
**characterised in**
**that** the first support face (6) and the first contact face (14) are aligned parallel to the second longitudinal axis (Y).

5. Knife attachment arrangement according to any one of the preceding claims,
**characterised in**
**that** the connection means comprise a screw (24), which protrudes through a first bore (19) that is formed on the top bearing holding area (13) of the mower knife drive pin (2) into a second bore (11) that is formed in the wall (5).

6. Knife attachment arrangement according to claim 5,
**characterised in**
**that** the first bore (19) of the mower knife drive pin (2) and the second bore (11) of the wall (5) are aligned radially to the second longitudinal axis (Y).

7. Knife attachment arrangement according to anyone of claims 5 or 6,
**characterised in**
**that** a first opening (20) of the first bore (19) is formed in the first contact face (14) of the mower knife drive pin (2) and that a second opening (21) of the second bore (11) is formed in the first support face (6) of the wall (5).

8. Knife attachment arrangement according to claim 7,
**characterised in**
**that** the mower knife drive pin (2) has in the head bearing holding area (13) an abutment face (23) extending parallel to the second longitudinal axis (Y), wherein a third opening (22) of the first bore (19) is formed in the abutment face (23).

9. Knife attachment arrangement according to claim 8,
**characterised in**
**that** the third opening (22) is arranged diametrically to the first opening (20) on the head bearing holding area (13) of the mower knife drive pin (2).

10. Knife attachment arrangement according to claim 1,
**characterised in**
**that** the collar (16) is formed on a longitudinal end (15) of the head bearing holding area (13) of the mower knife drive pin (2) engaging in the receiving space (4).

11. Knife attachment arrangement according to claim 1 or 10,
**characterised in**
**that**, between a wall portion (9) of the wall (5) that radially delimits the undercut (8) and the first support face (6), the wall (5) has a second support face (10) arranged inclined to the first support face (6),
and **that**, between a collar face (17) that radially delimits the collar (16) and the first contact face (14), the mower knife drive pin (2) has a second contact face (18) arranged parallel to the second support face (10) and contacting the second support face (10).

12. Knife attachment arrangement according to claim 11,
**characterised in**
**that** the first support face (6) is arranged coaxially to the second longitudinal axis (Y) and is circular cylindrical in sections.

13. Knife attachment arrangement according to any one of claims 11 or 12,
**characterised in**
**that** the second support face (10) is arranged coaxially to the second longitudinal axis (Y) and is truncated conical in sections, wherein the second support face (10) has preferably a cone angle of 130º to 170º.

14. Knife attachment arrangement according to any one of the preceding claims,
**characterised in**
**that** the mower knife drive pin (2) is held in abutment to a bottom plate (12) delimiting the receiving space (4) by an end face (40) arranged transversally to the second longitudinal axis (Y)

## Revendications

1. Dispositif de raccordement de lames, destiné à des lames de fauchage, pourvu d'un arbre (1), qui définit un premier axe longitudinal (X) et comporte un espace de réception (4),
d'un tourillon d'entraînement de lames de fauchage (2) s'engageant dans l'espace de réception (4) et assemblé de manière amovible avec l'arbre (1), qui en direction axiale par rapport au premier axe longitudinal (X) s'étend au-delà de l'arbre (1) et définit un deuxième axe longitudinal (Y) décalé en direction radiale par rapport au premier axe longitudinal (X), une paroi (5) de l'arbre (1) qui délimite l'espace de réception (4) comportant une première surface de soutien (6) incurvée dans la direction périphérique, et une zone de retenue de palier de tête (13) du tourillon d'entraînement de lames de fauchage (2) qui s'engage dans l'espace de réception (4) comportant une première surface d'appui (14) qui est en appui avec la première surface de soutien (6) et qui est incurvée en correspondance avec la première surface de soutien (6), et des moyens d'assemblage (24) pour l'assemblage amovible du tourillon d'entraînement de lames de fauchage (2) avec l'arbre (1),
**caractérisé en ce que**
dans la paroi (5) qui délimite l'espace de réception (4) est ménagée une contre-dépouille (8) et **en ce que** la zone de retenue de palier de tête (13) du tourillon d'entraînement de lames de fauchage (2) comporte un collet (16) qui s'engage dans la contre-dépouille (8), la contre-dépouille étant conçue sous la forme d'une rainure (8) s'étendant en direction radiale par rapport au deuxième axe longitudinal (Y) dans la paroi (5).

2. Dispositif de raccordement de lames selon la revendication 1, **caractérisé en ce que**
la première surface de soutien (6) est incurvée de manière concave et **en ce que** la première surface d'appui (14) est incurvée de manière convexe.

3. Dispositif de raccordement de lames selon la revendication 1 ou 2, **caractérisé**
**en ce qu'**une section transversale de la première surface de soutien (6) et une section transversale de la première surface d'appui (14) présentent respectivement la forme d'un demi-cercle autour d'un point médian (M) situé sur le deuxième axe longitudinal (Y).

4. Dispositif de raccordement de lames selon l'une quelconque des revendications précédentes, **caractérisé en ce que**
la première surface de soutien (6) et la première surface d'appui (14) sont conçues à la parallèle du deuxième axe longitudinal (Y).

5. Dispositif de raccordement de lames selon l'une quelconque des revendications précédentes, **caractérisé en ce que**
les moyens d'assemblage comportent une vis (24), qui à travers un premier perçage (19) ménagé sur la zone de retenue de palier de tête (13) du tourillon d'entraînement de lames de fauchage (2) s'engage dans un deuxième perçage (11) ménagé dans la paroi (5).

6. Dispositif de raccordement de lames selon la revendication 5, **caractérisé en ce que**
le premier perçage (19) du tourillon d'entraînement de lames de fauchage (2) et le deuxième perçage (11) de la paroi (5) sont conçus en direction radiale par rapport au deuxième axe longitudinal (Y).

7. Dispositif de raccordement de lames selon la revendication 5 ou 6, **caractérisé en ce que**
dans la première surface d'appui (14) du tourillon d'entraînement de lames de fauchage (2) est ménagé un premier orifice (20) pour le premier perçage (19) et dans la première surface de soutien (6) de la paroi (5) est ménagé un deuxième orifice (21) pour le deuxième perçage (11).

8. Dispositif de raccordement de lames selon la revendication 7, **caractérisé en ce que**
dans la zone de retenue de palier de tête (13), le tourillon d'entraînement de lames de fauchage (2) comporte une surface de butée (23) qui s'étend à la parallèle du deuxième axe longitudinal (Y), dans la surface de butée (23) étant ménagé un troisième orifice (22) pour le premier perçage (19).

9. Dispositif de raccordement de lames selon la revendication 8, **caractérisé en ce que** le troisième orifice (22) est placé diamétralement au premier orifice (20) sur la zone de retenue de palier de tête (13) du tourillon d'entraînement de lames de fauchage (2) .

10. Dispositif de raccordement de lames selon la revendication 1, **caractérisé en ce que**
le collet (16) est conçu sur une extrémité longitudinale (15) de la zone de retenue de palier de tête (13) du tourillon d'entraînement de lames de fauchage (2) qui s'engage dans l'espace de réception (4).

11. Dispositif de raccordement de lames selon la revendication 1 ou 10, **caractérisé**
**en ce qu'**entre une portion de paroi (9) de la paroi (5) qui délimite la contre-dépouille (8) en direction radiale et la première surface de soutien (6), la paroi (5) comporte une deuxième surface de soutien (10) placée en oblique par rapport à la première surface de soutien (6) et en ce qu'entre une surface de collet (17) qui délimite le collet (16) en direction radiale et la première surface d'appui (14), le tourillon d'entraînement de lames de fauchage (2) comporte une deuxième surface d'appui (18) placée à la parallèle de la deuxième surface de soutien (10) et qui est en appui sur la deuxième surface de soutien (10).

12. Dispositif de raccordement de lames selon la revendication 11, **caractérisé en ce que**
la première surface de soutien (6) est placée de manière coaxiale par rapport au deuxième axe longitudinal (Y) et est conçue en forme de segment cylindrique circulaire.

13. Dispositif de raccordement de lames selon la revendication 11 ou 12, **caractérisé en ce que**
la deuxième surface de soutien (10) est placée de manière coaxiale par rapport au deuxième axe longitudinal (Y) et en conçue en forme de segment tronconique, la deuxième surface de soutien (10) comportant de préférence un angle de conicité de 130° à 170°.

14. Dispositif de raccordement de lames selon l'une quelconque des revendications précédentes, **caractérisé en ce que**
par une surface frontale (40) placée à la transversale du deuxième axe longitudinal (Y) , le tourillon d'entraînement de lames de fauchage (2) est maintenu en appui sur une plaque de base (12) qui délimite l'espace de réception (4).
